(19) Europäisches Patentamt / European Patent Office / Office européen des brevets

(11) **EP 3 094 179 B1**

(12) **EUROPEAN PATENT SPECIFICATION**

(45) Date of publication and mention
of the grant of the patent:
**21.10.2020 Bulletin 2020/43**

(21) Application number: **15710928.1**

(22) Date of filing: **13.01.2015**

(51) Int Cl.:
*A01N 37/48* (2006.01)        *A01N 43/90* (2006.01)
*A01P 13/00* (2006.01)

(86) International application number:
**PCT/IL2015/050043**

(87) International publication number:
**WO 2015/107518 (23.07.2015 Gazette 2015/29)**

(54) **HERBICIDAL MIXTURES, COMPOSITIONS AND USES THEREOF**

HERBIZIDE MISCHUNGEN, ZUSAMMENSETZUNGEN UND VERWENDUNGEN DAVON

MÉLANGES HERBICIDES, COMPOSITIONS ET UTILISATIONS DE CEUX-CI

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.01.2014 US 201461927142 P**

(43) Date of publication of application:
**23.11.2016 Bulletin 2016/47**

(60) Divisional application:
**19198591.0 / 3 603 393**

(73) Proprietor: **Adama Agan Ltd.
7710201 Ashdod (IL)**

(72) Inventors:
• **WINDREICH, Shlomo**
  **5237699 Ramat-Gan (IL)**
• **NAHMOUD, Sergio**
  **7775113 Ashdod (IL)**
• **ROSENBERG, David**
  **7950500 Nir Israel (IL)**

(74) Representative: **Modiano, Micaela Nadia et al
Modiano & Partners
Thierschstrasse 11
80538 München (DE)**

(56) References cited:
**DE-A1- 19 919 951**

• **DOMINIQUE LEPIÈCE ET AL: "Florasulam
Primus) a new selective triazolopyrimidine
sulfonanilide (ALS) herbicide to control
broad-leaved weeds in cereals; Belgian Results
from 1994 to 1997", MEDEDELINGEN -
FACULTEIT LANDBOUWKUNDIGE EN
TOEGEPASTE BIOLOGISCHE
WETENSCHAPPEN UNIVERSITEIT GENT, vol. 63,
no. 3a, 1 January 1998 (1998-01-01), pages
735-742, XP055009596, ISSN: 0368-9697**
• **LEPIECE, D. THOMPSON, A.RIJCKAERT, G.:
"Florasulam Primus, a new selective herbicide for
the control of broad-leaved weeds in young
grass", MEDEDELINGEN FACULTEIT
LANDBOUWKUNDIGE EN TOEGEPASTE
BIOLOGISCHE WETENSCHAPPEN, vol. 64 (3b),
31 December 2000 (2000-12-31), pages 693-712,
XP009184036, Gent ISSN: 1373-7503**

**Description**

**TECHNICAL FIELD**

The present subject matter relates to a herbicidal formulation for controlling undesired vegetation.

**BACKGROUND**

The control of undesired vegetation is extremely important in order to achieve high crop efficiency. In many cases, while herbicides have an effect against a spectrum of weeds, they do not however fight a certain type of other weeds, which is also present in the crop cultures to be protected. Therefore, there is a strong need for mixing two or more herbicides.

Mixtures of selected herbicides have several advantages over the use of a single herbicide including (a) an increase in the spectrum of weeds controlled or an extension of weed control over a longer period of time, (b) an improvement in crop safety by using minimum doses of selected herbicides applied in combination rather than a single high dose of one herbicide, and (c) a delay in the appearance of resistant weed species to selected herbicides (Int. J. Agri. Biol., Vol. 6, No. 1, 2004, pages 209-212).

However, the activity and selectivity behavior of any specific mixture is difficult to predict since the behavior of each single herbicide in the mixture is often affected by the presence of the other(s) and the activity of the mixture may also vary considerably depending on chemical character, plant species, growth stage, and environmental conditions. Mostly, this practice results in reduced activity of the herbicides in the mixture.

Bifenox (methyl 5-(2,4-dichlorophenoxy)-2-nitrobenzoate), disclosed in US 3,652,645 is a protoporphyrinogen oxidase inhibitor and acts by cellular membrane disruption and by inhibition of photosynthesis. It is a selective herbicide, absorbed by the foliage, emerging shoots and roots, with limited translocation from roots and foliage to shoots. Bifenox is used for the control of annual broad-leaved weeds and some grasses in cereals, maize, sorghum, soya beans, rice, and some other crops.

Florasulam (*N*-(2,6-difluorophenyl)-8-fluoro-5-methoxy[1,2,4]triazolo[1,5-c]pyrimidine-2-sulfonamide), reported by A. R. Thompson et al. (Proc. Br. Crop Prot. Conf. - Weeds, 1999, 1, 73), is a branched chain amino acid (leucine, isoleucine and valine) synthesis (ALS or AHAS) inhibitor. It is taken up by root and shoots, and translocated in both xylem and phloem. Florasulam is used for the control of post-emergence control of broad-leaved weeds, especially *Galium aparine, Stellaria media, Polygonum convolvulus, Matricaria spp.* and various cruciferae, in cereals and maize.

**SUMMARY**

The present invention provides a method of controlling undesired vegetation comprising applying to a locus of the undesired vegetation a herbicidally effective amount of a mixture comprising bifenox and florasulam esters, salts and/or combinations thereof, wherein bifenox is applied at a rate of between 400 g/ha to 550 g/ha, and florasulam is applied at a rate of between 1 g/ha to 10 g/ha.

**DETAILED DESCRIPTION**

Definitions

Prior to setting forth the present subject matter in detail, it may be helpful to provide definitions of certain terms to be used herein. Unless defined otherwise, all technical and scientific terms used herein have the same meaning as is commonly understood by one of skill in the art to which this subject matter pertains.

As used herein, the phrase "agriculturally acceptable carrier" means carriers which are known and accepted in the art for the formation of formulations for agricultural or horticultural use.

As used herein, the term "crop" includes reference to a whole plant, plant organ (e.g., leaves, stems, twigs, roots, trunks, limbs, shoots, fruits etc.), plant cells, or plant seeds. This term also encompasses plant crops such as fruits. In yet another embodiment, the term "plant" may include the propagation material thereof, which may include seeds and spores, vegetative structures such as bulbs, corms, tubers, rhizomes, roots stems, basal shoots, stolons, and buds.

As used herein, the term "locus" includes not only areas where weeds may already be growing, but also areas where weeds have yet to emerge, and also to areas under cultivation.

As used herein, the term "post-emergence," refers to the application of the herbicide composition to the weeds that have emerged from the soil. The term "pre-emergence" refers to the application of the herbicide composition to a habitat, a weed, or soil, prior to the emergence of the weeds from the soil.

As used herein, the term "control of undesirable vegetation" refers to the interference with the normal growth and development of undesired vegetation. Examples of control activity include, but are not limited to, inhibition of root growth, inhibition of shoot growth, inhibition of shoot emergence, inhibition of seed production, or reduction of weed biomass.

As used herein, the term "effective amount" refers to an amount of the compound that, when ingested, contacted with or sensed, is sufficient to achieve a good level of control.

As used herein, the term "mixture" or "combination" refers, but is not limited to, a combination in any physical form, e.g., blend, solution, alloy, or the like.

As used herein, the term "surfactant" refers to any agriculturally acceptable material which imparts emulsifiability, stability, spreading, wetting, dispersibility, or other surface-modifying properties. Examples of suitable surfactants include, but are not limited to, non-ionic, anionic, cationic and ampholytic types such as alkoxylated fatty alcohols, ethoxylated polysorbate (e.g. tween 20), ethoxylated castor oil, lignin sulfonates, fatty acid sulfonates (e.g. lauryl sulfonate), phosphate esters such as phosphate esters of alcohol alkoxylates, phosphate esters of alkylphenol alkoxylates and phosphate esters of styrylphenol ethoxylates, condensates of sulfonated naphthalene and naphthalene derivatives with formaldehyde, condensates of naphthalene or of naphthalenesulfonic acid with phenol and formaldehyde, alkylarylsulfonates, ethoxylated alkylphenols and aryl phenols, polyalkylene glycols sorbitol esters, alkali metal, sodium salts of lignosulphonates, tristyrylphenol ethoxylate phosphate esters, aliphatic alcohol ethoxylates, alkylphenol ethoxylates, ethylene oxide/propylene oxide block copolymers, graft copolymers and polyvinyl alcohol-vinyl acetate copolymers. Other surfactants known in the art may be used as desired..

The term "a" or "an" as used herein includes the singular and the plural, unless specifically stated otherwise. Therefore, the terms "a," "an" or "at least one" can be used interchangeably in this application.

Throughout the application, descriptions of various embodiments use the term "comprising"; however, it will be understood by one of skill in the art, that in some specific instances, an embodiment can alternatively be described using the language "consisting essentially of' or "consisting of."

For purposes of better understanding the present teachings and in no way limiting the scope of the teachings, unless otherwise indicated, all numbers expressing quantities, percentages or proportions, and other numerical values used in the specification and claims, are to be understood as being modified in all instances by the term "about." Accordingly, unless indicated to the contrary, the numerical parameters set forth in the following specification and attached claims are approximations that may vary depending upon the desired properties sought to be obtained. At the very least, each numerical parameter should at least be construed in light of the number of reported significant digits and by applying ordinary rounding techniques. In this regard, used of the term "about" herein specifically includes $\pm 10\%$ from the indicated values in the range. In addition, the endpoints of all ranges directed to the same component or property herein are inclusive of the endpoints, are independently combinable, and include all intermediate points and ranges.

## Herbicidal Mixture

The present disclosure relates to a synergistic herbicidal mixture comprising a herbicide which inhibits the action of protoporphyrinogen oxidase and a herbicide which inhibits the action of ALS/AHAS.

In one embodiment of the present disclosure, the herbicide which inhibits the action of protoporphyrinogen oxidase is selected from the group comprising, acifluorfen-Na, azafenidin, benzfendizone, bifenox, butafenacil, carfentrazone-ethyl, chlomethoxyfen, cinidon-ethyl, fluazolate, flufenpyr-ethyl, flumioxazin, flumiclorac-pentyl, fluoroglycofenethyl, fluthiacet-methyl, fomesafen, halosafen, lactofen, oxadiazon, oxadiargyl, oxyfluorfen, pentoxazone, profluazol, pyraclonil, pyraflufen-ethyl, sulfentrazone, and thidiazimin. In a specific embodiment, the herbicide which inhibits the action of protoporphyrinogen oxidase is bifenox.

In one embodiment of the present disclosure, the herbicide which inhibits the action of ALS/AHAS is selected from the group comprising amidosulfuron, azimsulfuron, bensulfuron-methyl, bispyribac-Na, chlorimuron-ethyl, chlorsulfuron, cinosulfuron, cloransulam-methyl, cyclosulfamuron, diclosulam, ethametsulfuron-methyl, ethoxysulfuron, flazasulfuron, florasulam, flucarbazone-Na, flumetsulam, flupyrsulfuron-methyl-Na, foramsulfuron, halosulfuron-methyl, imazamethabenz-methyl, imazamox, imazapic, imazapyr, imazaquin, imazethapyr, imazosulfuron, iodosulfuron, mesosulfuron, metosulam, metsulfuron-methyl, nicosulfuron, oxasulfuron, penoxsulam, primisulfuron-methyl, propoxycarbazone-Na, prosulfuron, pyrazosulfuron-ethyl, pyribenzoxim, pyriftalid, pyrithiobac-Na, pyriminobac-methyl, rimsulfuron, sulfometuron-methyl, sulfosulfuron, thifensulfuron-methyl, triasulfuron, tribenuron-methyl, trifloxysulfuron, triflusulfuron-methyl, and tritosulfuron. In a specific embodiment, the herbicide which inhibits the action of ALS/AHAS is florasulam.

In one embodiment, the present disclosure relates to a herbicidal mixture of bifenox and florasulam.

In one embodiment, the present disclosure relates to a synergistic herbicidal mixture of bifenox and florasulam, or an ester or salt of any of the foregoing, and/or a combination thereof.

The weight ratio of the herbicide which inhibits the action of protoporphyrinogen oxidase to the herbicide which inhibits the action of ALS/AHAS cannot generally be defined, as it varies depending upon various conditions such as the type of the formulation, weather conditions, the type of crop and the type of weeds.

In one embodiment of the present disclosure, the weight ratio of the herbicide which inhibits the action of protoporphyrinogen oxidase to the herbicide which inhibits the action of ALS/AHAS in the mixture is from about 1:100 to 100:1. In another embodiment, the weight ratio is from about 0.5-1:90-100 to 90-100:0.5-1. In yet another embodiment, the weight ratio is from about 1-5:95-100 to 95-100:1-5. In a specific embodiment, the weight ratio of bifenox to florasulam is from about 90:1 to about 100:1.

The present disclosure further relates to a composition for the selective control of weeds and grasses in crops of cultivated plants comprising a herbicide which inhibits the action of protoporphyrinogen oxidase; a herbicide which inhibits the action of ALS/AHAS or an ester or salt of any of the foregoing, and/or a combination thereof; and an agriculturally acceptable carrier.

In a specific embodiment, the present disclosure further relates to a composition comprising bifenox and florasulam and an agriculturally acceptable carrier.

In yet another embodiment of the present disclosure, the composition comprises at least one additional component selected from the group of surfactants, solid diluents and liquid diluents.

The present composition may include additional crop protection agents, for example for example insecticides, herbicides, fungicides, bactericides, nematicides, molluscicides, growth regulators, biological agents, fertilizers, or mixtures thereof. However, for the avoidance of doubt it is understood that such additional crop protection agents are unnecessary to achieve the synergistic effects of the present combinations. Accordingly, the present herbicidal compositions and herbicidal mixtures may be limited to containing a herbicide which inhibits the action of protoporphyrinogen oxidase (e.g. bifenox) and a herbicide which inhibits the action of ALS/AHAS (e.g. florasulam) as the only crop protection agents and/or herbicides present.

The mixture and formulations of the present disclosure may be applied in conjunction with one or more co-herbicides to control a wider variety of undesirable vegetation. When used in conjunction with co-herbicides, the composition can be formulated with the co-herbicide or co-herbicides, tank mixed with the co-herbicide or co-herbicides or applied sequentially with the co-herbicide or co-herbicides. Some of the co-herbicides that can be employed in conjunction with the mixture of the present subject matter include but are not limited to 2,4-D, 2,4-D-butotyl, 2,4-D-butyl, 2,4-D-dimethylammonium, 2,4-D-diolamine, 2,4-D-ethyl, 2,4-D-2-ethylhexyl, 2,4-D- isobutyl, 2,4-D-isoctyl, 2,4-D-isopropyl, 2,4-D-isopropylammonium, 2,4-D-sodium, 2,4- D-isopropanolammonium, 2,4-D-trolamine, 2,4-DB, 2,4-DB-butyl, 2,4-DB- dimethylammonium, 2,4-DB-isoctyl, 2,4-DB-potassium, 2,4-DB-sodium, dichlorprop, dichlorprop-butotyl, dichlorprop-dimethylammonium, dichlorprop-isoctyl, dichlorprop- potassium, dichlorprop-P, dichlorprop-P-dimethylammonium, dichlorprop-P-potassium, dichlorprop-P-sodium, MCPA, MCPA-butotyl, MCPA-dimethylammonium, MCPA-2- ethylhexyl, MCPA-potassium, MCPA-sodium, MCPA-thioethyl, MCPB, MCPB-ethyl, MCPB-sodium, mecoprop, mecoprop-butotyl, mecoprop-sodium, mecoprop-P, mecoprop-P-butotyl, mecoprop-P-dimethylammonium, mecoprop-P-2-ethylhexyl, mecoprop-P-potassium, naproanilide, clomeprop, 2,3,6-TBA, dicamba, dicamba-butotyl, dicamba-diglycolamine, dicamba- dimethylammonium, dicamba-diolamine, dicamba-isopropylammonium, dicamba- potassium, dicamba-sodium, dichlobenil, picloram, picloram-dimethylammonium, picloram-isoctyl, picloram-potassium, picloram-triisopropanolammonium, picloram- triisopropylammonium, picloram-trolamine, triclopyr, triclopyr-butotyl, triclopyr- triethylammonium, clopyralid, clopyralid-olamine, clopyralid-potassium, clopyralid- triisopropanolammonium, aminopyralid, naptalam, naptalam- sodium, benazolin, benazolin-ethyl, quinclorac, quinmerac, diflufenzopyr, diflufenzopyr- sodium, fluroxypyr, fluroxypyr-2-butoxy-1-methylethyl, fluroxypyr-meptyl, chlorflurenol, chlorflurenol-methyl, aminocyclopyrachlor, aminocyclopyrachlor-methyl, aminocyclopyrachlor-potassium, chlorotoluron, diuron, fluometuron, linuron, isoproturon, metobenzuron, tebuthiuron, dimefuron, isouron, karbutilate, methabenzthiazuron, metoxuron, monolinuron, neburon, siduron, terbumeton, trietazine, metobromuron, simazine, atrazine, atratone, simetryn, prometryn, dimethametryn, hexazinone, metribuzin, teroutnyiazine, cyanazine, ametryn, cybutryne, triaziflam, indaziflam, terbutryn, propazine, metamitron, prometon, bromacil, bromacyl-lithium, lenacil, terbacil, propanil, cypromid, swep, desmedipham, phenmedipham, bromoxynil, bromoxynil-octanoate, bromoxynil-heptanoate, ioxynil, ioxynil-octanoate, ioxynil- potassium, ioxynil-sodium, pyridate, bentazone, bentazone-sodium, amicarbazone, methazole, pentanochlor, paraquat, diquat, nitrofen, chlomethoxyfen, bifenox, acifluorfen, acifluorfen-sodium, fomesafen, fomesafen-sodium, oxyfluorfen, lactofen, aclonifen, ethoxyfen-ethyl (HC-252), fluoroglycofen-ethyl, fluoroglycofen, chlorphthalim, flumioxazin, flumiclorac, flumiclorac-pentyl, cinidon-ethyl, fluthiacet, fluthiacet-methyl, oxadiargyl, oxadiazon, sulfentrazone, carfentrazone-ethyl, thidiazimin, pentoxazone, azafenidin, isopropazole, pyraflufen-ethyl, benzfendizone, butafenacil, saflufenacil, flupoxam, fluazolate, profluazol, pyraclonil, flufenpyr-ethyl, bencarbazone, ethyl[3-(2- chloro-4-fluoro-5-(3-methyl-2,6-dioxo-4-trifluoromethyl-3,6-dihydro-2H-pyrimidin-1-yl)phenoxy)pyridin-2-yloxy]acetate (SYN-523), norflurazon, chloridazon, metflurazon, pyrazolynate, pyrazoxyfen, benzofenap, topramezone, pyrasulfotole, amitrole, fluridone, flurtamone, diflufenican, methoxyphenone, clomazone, sulcotrione, mesotrione, tembotrione, tefuryltrione, bicyclopyrone, isoxaflutole, difenzoquat, difenzoquat-metilsulfate, isoxachlortole, benzobicyclon, picolinafen, beflubutamid, diclotop-methyl, diclotop, pyriphenop-sodium, fluazifop-butyl, fluazifop, fluazifop-P, fluazifop-P-butyl, haloxyfop- methyl, haloxyfop, haloxyfop-etotyl, haloxyfop-P, haloxyfop-P-methyl, quizalofop-ethyl, quizalofop-P, quizalofop-P-ethyl, quizalofop-P-tefuryl, cyhalofop-butyl, fenoxaprop-ethyl, fenoxaprop-P, fenoxaprop-P-ethyl, metamifop-propyl, metamifop, clodinafop-propargyl, clodinafop, propaquizafop, alloxydim-sodium, alloxydim, clethodim, sethoxydim, tralkoxydim, butroxydim, tepraloxydim, profoxydim, cycloxydim, flamprop-M-methyl, flamprop-M, flamprop-M- isopropyl, chlorimuron-ethyl, chlorimuron, sulfometuron-methyl, sulfometuron, primisulfuron-methyl, primisulfuron, bensulfuron-methyl, bensulfuron, chlorsulfuron, metsulfuron-methyl, metsulfuron, cinosulfuron, pyrazosulfuron-ethyl, pyrazosulfuron, azimsulfuron, rimsulfuron, imazosulfuron, cyclosulfamuron, prosulfuron, flupyrsulfuron-methyl-sodium, flupyrsulfuron, triflusulfuron-methyl, triflusulfuron, halosulfuron-methyl, halosulfuron, thifensulfuron-methyl, thifensulfuron, ethoxysulfuron, oxasulfuron, ethametsulfuron, ethametsulfuron-methyl, iodosulfuron, iodosulfuron-methyl-sodium, sulfosulfuron, triasulfuron, tribenuron-methyl, tribenuron, tritosulfuron, foramsulfuron, trifloxysulfuron, trifloxysulfuron-sodium, mesosulfuron, mesosulfuron-methyl, orthosulfamuron, flucetosulfuron, amidosulfuron, propyrisulfuron, metazosulfuron, iofensulfuron, flumetsulam, metosulam, diclosulam, cloransulam-methyl, florasulam, penoxsulam, pyroxsulam, imazapyr, imazapyr-isopropylammonium, imazethapyr, imazethapyr- ammonium, imazaquin, imazaquin-ammonium, imazamox, imazamox-ammonium, imazamethabenz, imazamethabenz-methyl, imazapic, pyrithiobac-sodium, bispyribac-sodium, pyriminobac-methyl, pyribenzoxim, pyriftalid, pyrimisulfan, triafamone, flucarbazone, flucarbazone-sodium, propoxycarbazone-sodium, propoxycarbazone or thiencarbazone, glyphosate, glyphosate-sodium, glyphosate-potassium, glyphosate-ammonium, glyphosate-diammonium, glyphosate-isopropylammonium, glyphosate-trimesium, glyphosate-sesquisodium, glufosinate, glufosinate-ammonium, glufosinate-P, glufosinate-P-ammonium, glufosinate-P-sodium, bilanafos, bilanafos-sodium, cinmethylin, trifluralin, oryzalin, nitralin, pendimethalin, ethalfluralin, benfluralin, prodiamine, butralin, dinitramine, bensulide, napropamide, propyzamide, pronamide, amiprofos-methyl, butamifos, anilofos, piperophos, propham, chlorpropham, barban, carbetamide, daimuron, cumyluron, bromobutide, methyldymron, asulam, asulam-sodium, dithiopyr, thiazopyr, chlorthal-dimethyl, chlorthal, diphenamid, alachlor, metazachlor, butachlor, pretilachlor, metolachlor, thenylchlor, pethoxamid, acetochlor, propachlor, dimethenamid, dimethenamid-P, propisochlor, dimethachlor, molinate, dimepiperate, pyributicarb, EPTC, butylate, vernolate, pebulate, cycloate, prosulfocarb, esprocarb, thiobencarb, triallate, diallate, orbencarb, etobenzanid, flufenacet, mefenacet, tridiphane, cafenstrole, fentrazamide, oxaziclomefone, indanofan, benfuresate, pyroxasulfone, fenoxasulfone, dalapon, dalapon-sodium, TCA-sodium, trichloroacetic acid, MSMA, DSMA, CMA, endothall, endothall-dipotassium, endothall-sodium, endothall-mono(N,N-dimethylalkylammonium), ethofumesate, sodium chlorate, pelargonic acid (nonanoic acid), fosamine, fosamine-ammonium, pinoxaden, ipfencarbazone, aclolein, ammonium sulfamate, borax, chloroacetic acid, sodium chloroacete, cyanamide, methylarsonic acid, dimethylarsinic acid, sodium dimethylarsinate, dinoterb, dinoterb-ammonium, dinoterb-diolamine, dinoterb-acetate, DNOC, ferrous sulfate, flupropanate, flupropanate-sodium, isoxaben, mefluidide, mefluidide-diolamine, metam, metam-ammonium, metam-potassium, metam-sodium, methyl isothiocyanate, pentachlorophenol and sodium pentachlorophenoxide.

The compositions of the present disclosure can be made at the time of use, or diluted. The compositions of the present disclosure can also be concentrated compositions, or so-called "ready-to-use" compositions, that is to say, compositions ready for use.

The composition of the present disclosure may be employed or prepared in any conventional form, for example, in the form of a twin pack, or for example, as wettable powders (WP), emulsion concentrates (EC), microemulsion concentrates (MEC), water-soluble powders (SP), water-soluble concentrates (SL), suspoemulsion (SE), oil dispersions (OD), concentrated emulsions (BW) such as oil-in-water and water-in-oil emulsions, sprayable solutions or emulsions, capsule suspensions (CS), suspension concentrates (SC), suspension concentrates, dusts (DP), oil-miscible solutions (OL), seed-dressing products, granules (GR) in the form of microgranules, spray granules, coated granules and absorption granules, granules for soil application or broadcasting, water-soluble granules (SG), water-dispersible granules (WDG), ULV formulations, microcapsules or waxes. These individual formulation types are known in the art.

In an embodiment of the present disclosure, the amount of the mixture of active ingredients in the composition is about 0.1-99 wt. %, about 0.1-95 wt. %, or about 0.1-90 wt. %, based on the total weight of the composition. In another embodiment, the amount of the mixture of active ingredients in the composition is about 30-50 wt %, based on the total weight of the composition. In yet another embodiment, the amount of the mixture of active ingredients in the composition is from about 0.1%, 0.5%, 1%, 1.5%, 2%, 2.5%, 3%, 3.5%, 4%, 4.5%, 5% to about 90%, 93%, 95%, 98%, 99% based on the total weight of the composition.

In a specific embodiment of the present disclosure, the amount of the mixture of active ingredients in the composition is about 42 wt %, based on the total weight of the composition.

Examples of suitable liquid carriers potentially useful in the present compositions include but are not limited to water; aromatic hydrocarbons such as alkylbenzenes and alkylnaphthalenes; alcohols such as methanol, cyclohexanol, and decanol; ethylene glycol; polypropylene glycol; dipropylene glycol; N,N-dimethylformamide; dimethylsulfoxide; N-alkylpyrrolidones such as N-methyl-2-pyrrolidone; paraffins; various oils such as olive, castor, linseed, tung, sesame, corn, peanut, cotton-seed, soybean, rape-seed, or coconut oil; fatty acid esters; ketones such as cyclohexanone, 2-heptanone, isophorone, and 4-hydroxy-4-methyl-2-pentanone; and the like.

Examples of suitable solid carriers potentially useful in the present compositions include but are not limited to mineral earths such as silica gels, silicates, talc, kaolin, sericite, attaclay, limestone, bentonite, lime, chalk, bole, mirabilite, loess, clay, dolomite, zeolite, diatomaceous earth, calcium carbonate, calcium sulfate, magnesium sulfate, magnesium oxide, sodium carbonate and bicarbonate, and sodium sulfate; ground synthetic materials; fertilizers such as ammonium sulfate, ammonium phosphate, ammonium nitrate, ureas, and products of vegetable origin, such as cereal meal, tree bark meal, wood meal, and nutshell meal; cellulose powders; and other solid carriers.

Other ingredients, such as wetting agents, anti-foaming, adhesives, neutralizers, thickeners, binders, sequestrates, fertilizers, biocides, stabilizers, buffers or anti-freeze agents, may also be added to the present compositions in order to increase the stability, density, and viscosity of the described compositions.

The present invention provides a method of controlling undesired vegetation comprising applying to a locus of the undesired vegetation a herbicidally effective amount of bifenox and florasulam, salts and/or combinations thereof, wherein bifenox is applied at a rate of between 400 g/ha to 550 g/ha, and florasulam is applied at a rate of between 1 g/ha to 10 g/ha.

The mixtures and the herbicidal compositions can be applied pre-plant incorporated, pre- or post-emergence.

As used in the present methods, the herbicidal compositions discussed herein may be applied jointly or in a succession. That is, each of bifenox and florasulam may be applied jointly or in succession. In one example, bifenox and florasulam are prepared separately, and the individual formulations are applied as is, or diluted to predetermined concentrations. In a further example bifenox and florasulam are prepared separately, and the formulations are mixed when diluted to a predetermined concentration. In another example, bifenox and florasulam are formulated together, and the formulation is applied as it is, or the formulation is diluted to a predetermined concentration.

In an embodiment, the mixture is applied on crops which include one or more of cereals, wheat, barley, oats, winter wheat, spring wheat, winter barley, spring barley, triticale, cereal rye, winter durum wheat, spring durum wheat, winter oat, spring oat, fodder cereals, maize, ray-grass, cocksfoot, fescue, timothy, grass for seed and grassland. That is, the locus of undesired vegetation may contain one or more of these crops.

In yet another embodiment, the undesired vegetation may include one or more of *Brassica napus, Brassica nigra, Arctotheca calendula, Fallopia convolvulus, Sinapis arvensis, Stellaria media, Sonchus oleraceus, Buglossoides arvense, Ipomoea lonchophylla, Crassula spp., Lamium spp., Lamium amplexicaule, Fumaria densiflora, Rumex spp., Emex australis, Chenopodium spp., Chenopodium album, Senecio spp., Senecio vulgaris, Centaurea cyanus, Fumaria spp., Sisymbrium officinale, Melilotus indicus Marrubium vulgare, Lythrum hyssopifolia, Mesembryanthemum spp., Sisymbrium orientale, Sisymbrium irio, Erodium botrys, Cerastium glomeratum, Matthiola longipetala, Echium plantagineum, Lepidium spp., Lactuca serriola, Scleroblitum atriplicinum, Papaver hybridum, Carthamus lanatus, Anagallis arvensis, Capsella bursa-pastoris, Chondrilla juncea, Rumex spp., Onopordum acaulon, Juncus bufonius, Polygonum spp., Polygonum convolvulus, Polygonum patulum, Rapistrum rugosum, Silybum marianum, Vicia sativa, Lupinus spp., Carrichtera annua, Raphanus raphanistrum, Brassica tournefortii, Polygonum aviculare, Malva parviflora, Solanum nigrum, Amaranthus retroflexus, Galium aparine, Matricaria spp., Matricaria recutita, Matricaria chamomilla, Veronica spp., Papaver rhoeas, Viola arvensis, Ranunculus repens, Geranium spp., Volunteer Oilseed Rape,* and *Myosotis arvensis.*

In a further embodiment, the undesired vegetation may include one or more of *Galium aparine, Brassica nigra, Capsella bursa-pastoris, Fallopia convolvulus, Matricaria Spp., Matricaria chamomilla, Viola arvensis, Stellaria media, Veronica spp., Lamium spp., Myosotis arvensis, Volunteer Oilseed Rape, Senecio vulgaris, Centaurea cyanus, Papaver rhoeas, Polygonum spp.,* and *Chenopodium spp.*

The herbicidally effective amounts of the herbicide which inhibits the action of protoporphyrinogen oxidase to the herbicide which inhibits the action of ALS/AHAS cannot generally be defined, as it varies depending upon various conditions such as the type of the formulation, weather conditions, the type of crop and the type of weeds.

In yet another specific embodiment, the mixture of bifenox and florasulam is applied in an amount of 485 g/ha. In a specific embodiment, bifenox may be applied at a rate of 480 g/ha and florasulam may be applied at a rate of 5 g/ha.

In yet another embodiment, the herbicidal mixture is applied in an amount of from 0.1 to 10 liter/ha. In another embodiment, the herbicidal mixture is applied in an amount of from 0.1 to 1 liter/ha.

In a specific embodiment, the mixture is applied to the locus of undesired vegetation in an amount of 0.1 liter/ha. In yet another specific embodiment, the mixture is applied in an amount of 0.25 liter/ha. In still another specific embodiment, the mixture is applied in an amount of 0.5 liter/ha. In still yet another specific embodiment, the mixture is applied in an amount of 0.75 liter/ha. In a further specific embodiment, the mixture is applied in an amount of 2 liter/ha. In yet another specific embodiment, the mixture is applied in an amount of 1 liter/ha. In a further embodiment, the mixture is applied in an amount of 1.5 liter/ha.

In another embodiment, the present disclosure provides a kit comprising the herbicidal mixture as described herein, or components thereof. Such kits may comprise, in addition to the aforementioned active components, one or more additional active and/or inactive ingredients, either within the provided herbicidal composition or separately. Certain kits comprise a herbicide which inhibits the action of protoporphyrinogen oxidase and a herbicide which inhibits the action of ALS/AHAS or an esters or salt of any of the foregoing, and/or a combination thereof, each in a separate container, and each optionally combined with a carrier.

In an embodiment of the present disclosure, the kit comprises bifenox and florasulam.

A synergistic effect exists wherever the action of a combination of active components is greater than the sum of the action of each of the components alone. Therefore, a synergistically effective amount (or an effective amount of a synergistic composition or combination) as discussed herein is an amount that exhibits greater pesticidal activity than the sum of the pesticidal activities of the individual components.

Comparison of results between formulations, mixtures and individual herbicides may be accomplished by a number of different methods. The synergy of the mixture or formulation may be calculated, the %survival of the weeds may be determined, %efficacy of the herbicide may be determined and the amount of biomass of the weeds may be determined, visually or otherwise. It may be appreciated that biomass may be defined as the organic material present on the weeds. In some embodiments, the application of herbicides may diminish the biomass of weeds. This may be done by preventing the weed to grow beyond a certain point and/or prevent the weed from developing seeds and/or leaves and/or branches and/or other parts of the plant.

In the context of the present subject matter, the term "synergy" is as defined by Colby S. R. in an article entitled "Calculation of the synergistic and antagonistic responses of herbicide combinations" published in the journal Weeds, 1967, 15, p. 20-22, incorporated herein by reference in its entirety. The action expected for a given combination of three active components can be calculated as follows:

$$E = X + Y - \frac{XY}{100}$$

in which E represents the expected percentage of pesticidal control for the combination of the three pesticides at defined doses (for example equal to x, y and z respectively), X is the percentage of herbicidal control observed by bifenox at a defined dose (equal to x), Y is the percentage of herbicidal control observed by florasulam at a defined dose (equal to y). When the percentage of herbicidal control observed for the combination is greater than the expected percentage, there is a synergistic effect. When the percentage of control observed for the combination is equal to the expected percentage, there is an additive effect and wherein the percentage of herbicidal control observed for the combination is lower than the expected percentage, there is an antagonistic effect.

**EXPERIMENTAL DETAILS**

Formulation Example

One exemplary embodiment of the ready mix suspension concentrate formulation is illustrated in Table 1, below:

TABLE 1

| Ingredient | % w/w |
|---|---|
| Bifenox | 41.44 |
| Florasulam | 0.44 |
| Triethanolamine, with Poly(oxyethylene) Tristyrylphenyl Ether Phosphate | 2.54 |
| Hydrated Magnesium Aluminum Silicate, Fuller's Earth $(Mg,Al)_5Si_8O_{22}(OH)_4$ & $SiO_2$ | 0.42 |
| Xanthan gum | 0.17 |
| Propylene glycol | 4.24 |
| Polydimethylsiloxan | 0.25 |
| 1,2-Benzisothiazol- 3(2H)-one | 0.09 |
| Water | 50.41 |
| d= 1.080 g/l. | |

Example 1

In this example bifenox with florasulam were paired in order to control poppy in the areas where this species has developed populations resistant to the sulfonylureas, with partial cross-resistance to florasulam.

The poppy seeds were vernalized at 4 °C for 14 days in order to break dormancy. The vernalized seeds were then put into germination boxes containing a substrate of 0.6% agar and 0.2% KNO3 and placed in a germination chamber under the following conditions: 12 hours of light at 25 °C and 12 hours of darkness at 15 °C.

After 7-8 days, the germinated seeds were transplanted into trays (24x30x9 cm) containing a substrate composed of 60% soil from Legnaro, 15% sand, 15% perlite and 10% peat. The experiment was conducted in a heated greenhouse. Fifteen days after transplanting, the seedlings were thinned and counted. Each replication was composed of a tray containing 15-20 seedlings.

Six herbicide treatments were compared:

a) Bifenox 480 g/l + Florasulam 5 g/l SC formulation (Application Rate of 1.01/ha)

b) Bifenox 480 g/l + Florasulam 5 g/l SC formulation (Application Rate of 1.51/ha)

c) Florasulam 50 g/l SC(Application Rate of 0.11/ha)

d) Florasulam 50 g/l SC (Application Rate of 0.15 1/ha)

e) Bifenox 480 g/l (commercially available as Fox) (Application Rate of 1.01/ha)

f) Bifenox 480 g/l (commercially available as Fox) (Application Rate of 1.5 1/ha)

The treatments were done 20 days after transplanting when the plants were at the 4-6 leaf stage using a precision bench sprayer with TeeJet XR11002-VK fan nozzles, at a volume of 300 L/ha, working pressure of 215 kPa and speed of 0.75 m/sec.

The experimental scheme was completely randomized, with 3 replicate.

Three additional trays for each population were left untreated for comparison in the visual estimate of biomass (VEB). At 22 days after treatment, the number of surviving plants was counted and VEB was made, attributing 100% to the untreated control plants and 0% to the dead plants.

Results

Table 1 - Survival% and VEB of poppy populations

|  | Herbicide Treatment | Application Rate (L/ha) | # of Trials | Survival (%) (Average) | VEB (%) (Average) |
|---|---|---|---|---|---|
| Poppy Population #1 | Florasulam | 0.1 | 3 | 40.52 | 50.00 |
|  | Florasulam | 0.15 | 3 | 34.21 | 53.33 |
|  | Bifenox | 1.0 | 3 | 88.77 | 40.00 |
|  | Bifenox | 1.5 | 3 | 78.70 | 46.67 |
|  | Bifenox+Florasulam | 1.0 | 3 | 52.84 | 13.33 |
|  | Bifenox+Florasulam | 1.5 | 3 | 21.15 | 10.00 |
| Poppy Population #2 | Florasulam | 0.1 | 3 | 26.93 | 13.33 |
|  | Florasulam | 0.15 | 3 | 38.85 | 46.67 |
|  | Bifenox | 1.0 | 3 | 92.32 | 76.67 |
|  | Bifenox | 1.5 | 3 | 59.31 | 33.33 |
|  | Bifenox+Florasulam | 1.0 | 3 | 44.68 | 16.67 |
|  | Bifenox+Florasulam | 1.5 | 3 | 18.26 | 10.00 |

As can be seen in Table 1, the mixture bifenox+florasulam reduced the VEB more than single herbicides, with a good general control of the different populations, especially at an application rate of 1.5 l/ha. At an application rate of 1.5 l/ha, the survival rate of the poppy population was the lowest when the bifenox/florasulam formulation was applied in comparison to the survival rate when bifenox and florasulam were applied individually.

Example 2

Table 2 - Efficacy % - Application on Cereals

| Weed | Number of trials | % of Efficacy | | | |
|---|---|---|---|---|---|
| | | Bifenox 480 g/l + Florasulam 5 g/l SC Formulation Application rate = 1.0 l/ha | | Tank Mix of Bifenox 480 g/l + Florasulam 50 g/l SC Application Rate = 1.0 l/ha (bifenox) + 0.1 l/ha (florasulam) | |
| | | MEAN | Minimum-Maximum | MEAN | Minimum-Maximum |
| *Galium aparine* | 4 | 84,2 | (67,0-100) | 69,4 | (20,0-100) |
| *Matricaria recutita* | 1 | 78,0 | - | 68,0 | - |
| *Papaver rhoeas* | 5 | 81,2 | (60,0-96,5) | 72,8 | (40,0-96,4) |

As shown in Table 2, application of the bifenox/florasulam SC formulation provided better results with respect to the efficacy of the herbicides when compared to the tank-mix of bifenox and florasulam. Although only three weeds are shown in the above table 2, it can be appreciated that similar efficacy results may be obtained when the herbicides are applied to different weeds.

**Claims**

1. A method of controlling undesired vegetation comprising applying to a locus of the undesired vegetation a herbicidally effective amount of bifenox and florasulam esters, salts and/or combinations thereof jointly or in a succession or as a mixture comprising bifenox and florasulam esters, salts and/or combinations thereof, wherein bifenox is applied at a rate of between 400 g/ha to 550 g/ha, and florasulam is applied at a rate of between 1 g/ha to 10 g/ha.

2. The method of claim 1, wherein the mixture is applied in an amount of 485 g/ha.

3. The method of claim 2, wherein bifenox is applied at a rate of 480 g/ha and florasulam is applied at a rate of 5 g/ha.

4. The method of claim 1, wherein said locus of the undesired vegetation contains a crop to be treated selected from the group consisting of cereals, wheat, winter wheat, spring wheat, barley, winter barley, spring barley, oats, triticale, cereal rye, winter durum wheat, spring durum wheat, winter oat, spring oat, fodder cereals, maize, grassland, and combinations thereof.

5. The method of any one of claims 1-4, wherein said mixture is used to provide a rate of application of from 0.1 to 10 liter/ha.

6. The method of claim 5, wherein the application rate is 1 liter/ha.

7. The method of claim 5, wherein the application rate is 1.5 liter/ha.

8. The method of any one of claim 1, wherein bifenox and florasulam are applied jointly or in a succession.

**Patentansprüche**

1. Ein Verfahren zur Bekämpfung unerwünschter Vegetation, das Folgendes umfasst: das Aufbringen einer herbizid wirksamen Menge von Bifenox- und Florasulamestern, -salzen und/oder Kombinationen davon, gemeinsam oder nacheinander oder als eine Mischung, die Bifenox- und Florasulamester,

   - salze und/oder Kombinationen davon umfasst, auf einen Ort der unerwünschten Vegetation, worin Bifenox mit einer Rate zwischen 400 g/ha bis 550 g/ha aufgebracht wird, und Florasulam mit einer Rate zwischen 1g/ha bis 10 g/ha aufgebracht wird.

2. Das Verfahren gemäß Anspruch 1, worin die Mischung in einer Menge von 485g/ha aufgebracht wird.

3. Das Verfahren gemäß Anspruch 2, worin Bifenox mit einer Rate von 480 g/ha aufgebracht wird und Florasulam mit einer Rate von 5 g/ha aufgebracht wird.

4. Das Verfahren gemäß Anspruch 1, worin der Ort der unerwünschten Vegetation eine zu behandelnde Feldfrucht enthält, gewählt aus der Gruppe bestehend aus Zerealien, Weizen, Winterweizen, Sommerweizen, Gerste, Wintergerste, Sommergerste, Hafer, Triticale, Zerealienroggen, Winterhartweizen, Sommerhartweizen, Winterhafer, Sommerhafer, Futterzerealien, Mais, Grasland und Kombinationen davon.

5. Das Verfahren gemäß einem beliebigen der Ansprüche 1-4, worin die Mischung verwendet wird, um eine Aufbringungsrate von 0,1 bis 10 Liter/ha bereitzustellen.

6. Das Verfahren gemäß Anspruch 5, worin die Aufbringungsrate 1 Liter/ha beträgt.

7. Das Verfahren gemäß Anspruch 5, worin die Aufbringungsrate 1,5 Liter/ha beträgt.

8. Das Verfahren gemäß einem beliebigen von Anspruch 1 *(sic),* worin Bifenox und Florasulam gemeinsam oder nacheinander aufgebracht werden.


**Revendications**

1. Procédé de lutte contre de la végétation indésirable, comportant le fait d'appliquer, à l'endroit où pousse cette végétation indésirable, une quantité à effet herbicide d'esters et/ou de sels de bifénox et de florasulame et/ou d'une combinaison de tels esters et/ou sels, conjointement ou successivement, ou sous la forme d'un mélange comprenant des esters et/ou des sels de bifénox et de florasulame et/ou une combinaison de tels esters et/ou sels, étant entendu qu'on applique le bifénox à raison de 400 à 550 g/ha et qu'on applique le florasulame à raison de 1 à 10 g/ha.

2. Procédé conforme à la revendication 1, dans lequel on applique le mélange en une quantité de 485 g/ha.

3. Procédé conforme à la revendication 2, dans lequel on applique le bifénox à raison de 480 g/ha et le florasulame à raison de 5 g/ha.

4. Procédé conforme à la revendication 1, dans lequel il y a, audit endroit où pousse la végétation indésirable, une culture à traiter, choisie dans l'ensemble constitué par les suivantes : céréales, blé, blé d'hiver, blé de printemps, orge, orge d'hiver, orge de printemps, avoine, triticale, seigle, blé dur d'hiver, blé dur de printemps, avoine d'hiver, avoine de printemps, céréales à fourrage, maïs, herbages, et leurs associations.

5. Procédé conforme à l'une des revendications 1 à 4, dans lequel on utilise ledit mélange de manière à obtenir un taux d'application valant de 0,1 à 10 litres par hectare.

6. Procédé conforme à la revendication 5, dans lequel le taux d'application vaut 1 litre par hectare.

7. Procédé conforme à la revendication 5, dans lequel le taux d'application vaut 1,5 litre par hectare.

8. Procédé conforme à la revendication 1, dans lequel le bifénox et le florasulame sont appliqués conjointement ou successivement.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3652645 A

**Non-patent literature cited in the description**

- *Int. J. Agri. Biol.,* 2004, vol. 6 (1), 209-212
- **A. R. THOMPSON et al.** *Proc. Br. Crop Prot. Conf. - Weeds,* 1999, vol. 1, 73
- **COLBY S. R.** Calculation of the synergistic and antagonistic responses of herbicide combinations. *journal Weeds,* 1967, vol. 15, 20-22